# EUROPÄISCHE PATENTSCHRIFT

(11) **EP 2 596 899 B1**
(45) Veröffentlichungstag und Bekanntmachung des Hinweises auf die Patenterteilung: **11.11.2020**
(21) Anmeldenummer: 12193414.5
(22) Anmeldetag: 20.11.2012
(51) Int. Cl.: B23K 26/06, B23K 26/073, B23K 26/00, B23K 26/067

(54) **Vorrichtung und Verfahren zur Interferenzstrukturierung von flächigen Proben**
Method and device for the interference structuring of flat samples
Dispositif et procédé de structuration par interférences d'échantillons plats

(30) Priorität: 24.11.2011 DE 102011119764
(43) Veröffentlichungstag der Anmeldung: 29.05.2013
(73) Patentinhaber: Fraunhofer-Gesellschaft zur Förderung der angewandten Forschung, 80686 München (DE)
(72) Erfinder: Lasagni, Andrés Fabián, 01723 Grumbach (DE)
(74) Vertreter: Pfenning, Meinig & Partner mbB

(56) Entgegenhaltungen:
- WO-A2-2011/072663
- DE-A1-102006 032 053
- US-B1- 6 304 318

## Beschreibung

Die vorliegende Erfindung bezieht sich auf die Strukturierung von flächigen Proben mit Lasersystemen, insbesondere mit Faserlasern und/oder mit Lasersystemen mit hoher Pulsfrequenz.

Die US 2003/0035219 A1 beschreibt eine Vorrichtung zur Interferenzstrukturierung einer flächigen Probe. Diese weist einen Laser und eine im Strahlengang des Lasers angeordnete Aufweit- und Auftrennanordnung auf, mit welcher der Laserstrahl in einer Raumrichtung aufweitbar und in zwei Teilstrahlen aufteilbar ist. Die beiden Teilstrahlen werden auf ein Probenvolumen gerichtet, wo sie interferieren.

Die WO 2011/072663 A2 beschreibt eine Vorrichtung zur Interferenzstrukturierung, bei der vor einer Auftrennanordnung ein Teleskop angeordnet ist. Das Teleskop dient der Kontrolle und dem Einregeln des Strahldurchmessers.

Die JP 2006 110587 A beschreibt eine Aufweit- und Auftrennanordnung.

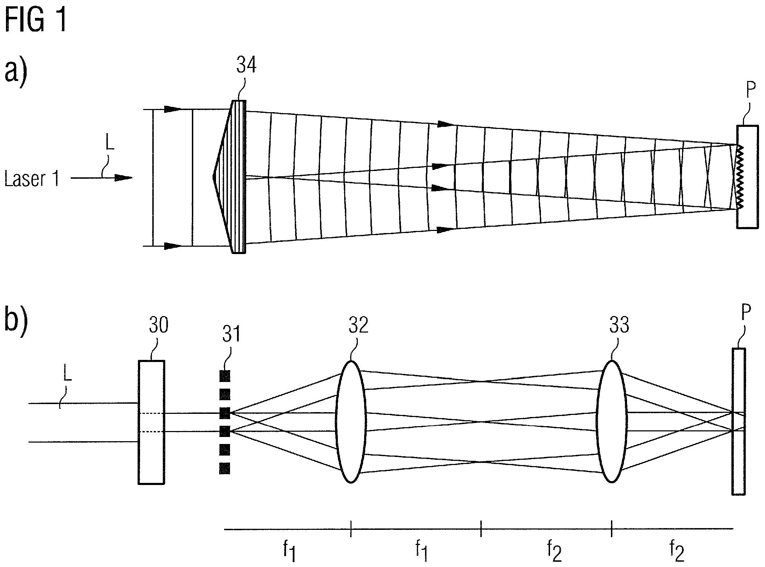

Aus dem Stand der Technik sind desweiteren zum einen Vorrichtungen und Verfahren zur Interferenzstrukturierung bekannt, die auf Basis von Prismen arbeiten: R. Sidharthan et al. "Periodic Patterning Using Multi-Facet Prism-Based Laser Interference Lithography", Laser Physics 19, 2009, S. 505 bis 510 sowie N. Rizvi et al. "Production of Submicrometer Period Bragg Gratings in Optical Fibers Using Wavefront Division With a Bi-Prism and an Excemer Laser Source", Appl. Phys. Lett. 67 (6), 7, 739. Ein entsprechendes Prinzip zeigt Figur 1a) schematisch (die auftreffende Laserstrahlung L des Lasers 1 wird mit Hilfe eines Biprismas 34 in zwei Teilstrahlen, die auf dem Substrat P überlagert werden, aufgeteilt).

Zum anderen ist aus dem Stand der Technik der Einsatz von diffraktiven optischen Elementen (Gittern) bekannt, um eine Interferenzstrukturierung von Proben zu bewirken. Siehe beispielsweise T. Kondo et al. "Femtosecond laser interference technique with diffractive beam splitter for fabrication of three-dimensional photonic crystals", Applied Physics Letters 79 (2001), 725-727. Das entsprechende Prinzip zeigt Figur 1b): Die Laserstrahlung L wird mit Hilfe einer Iris-Blende 30 homogenisiert und auf das diffraktive optische Element 31 geführt und die durch Diffraktion entstehenden Teilstrahlen werden mit Hilfe eines Linsensystems 32, 33 zur Interferenzstrukturierung auf die Probe P abgebildet.

Die aus dem Stand der Technik bekannten Vorrichtungen und Verfahren haben insbesondere den Nachteil, dass die pro Zeiteinheit strukturierbare Fläche sehr begrenzt ist. Zudem benötigen diese Vorrichtungen eine vergleichsweise große Baulänge und insbesondere die prismenbasierten Vorrichtungen weisen lediglich eine geringe Variabilität hinsichtlich der Einstellmöglichkeiten der Interferenzstrukturen auf.

So sind aus DE 10 2006 032 053 A1 Oberflächenmodifikationsverfahren und eine solche Vorrichtung bekannt, bei der Teilstrahlen eines Laserstrahls mit Gittern erzeugt und zur Interferenz gebracht werden.

WO 2011/072663 A2 ein Verfahren zur Herstellung eines Dünnschichtelementes, bei dem mehrere Teilstrahlen mit Mikrolinsen oder durch Strahlteilung auf eine zu modifizierende Oberfläche gerichtet werden.

Ein Lithografiesystem und ein entsprechendes Verfahren, bei dem dieses System genutzt wird, sind aus US 6,304,318 B1 bekannt.

Aufgabe der vorliegenden Erfindung ist es daher, ausgehend vom Stand der Technik Vorrichtungen und Verfahren zur Laserinterferenzstrukturierung von flächigen Proben zur Verfügung zu stellen, mit denen auch große flächige Proben einfach, zuverlässig und mit einer erhöhten Bearbeitungsgeschwindigkeit strukturiert werden können. Aufgabe ist es darüberhinaus, Vorrichtungen und Verfahren zur Verfügung zu stellen, die die Interferenzstrukturierung auf kompaktem Raum und mit hoher Variabilität beim Einstellen der Interferenzstrukturen (z.B. Einstellen deren Periode) realisieren.

Diese Aufgabe wird durch eine Vorrichtung gemäß Anspruch 1 sowie durch ein Verfahren gemäß Anspruch 15 gelöst. Vorteilhafte Ausführungsvarianten lassen sich jeweils den abhängigen Ansprüchen entnehmen. Erfindungsgemäße Verwendungen sind in Anspruch 16 beschrieben.

Die Grundidee der erfindungsgemäßen Lösung basiert darauf, unterschiedliche optische Elemente, insbesondere Zylinderlinsen, Strahlteiler und Spiegel, jedoch auch weitere Linsen, Polarisatoren usw. in die Laserstrahlung eines vorzugsweise gepulsten Lasers einzubringen, um eine sehr große Strahlaufweitung in einer Richtung (bis etwa 20 bis 40 cm) zu ermöglichen. Unterschiedliche Kombinationen der einzelnen optischen Elemente ermöglichen dabei die gewünschte Verformung, Auftrennung und Ausrichtung des Laserstrahls. Insbesondere wird/werden vorteilhafterweise eine oder mehrere Zylinderlinsen im Aufbau der Erfindung zur Strahlaufweitung eingesetzt. Besonders vorteilhaft ist auch der Einsatz einer den (im Querschnitt gaußförmigen) Laserstrahl an den Rändern beschneidenden Blende, mit der eine homogene oder nahezu homogene Strahlintensität über den Strahlquerschnitt hergestellt werden kann, bevor der Laserstrahl auf die weiteren optischen Elemente der erfindungsgemäßen Vorrichtung gerichtet wird.

Wird nachfolgend von einer Anordnung als Teil der erfindungsgemäßen Vorrichtung gesprochen, so kann diese Anordnung aus einem oder auch aus mehreren einzelnen optischen Elementen (Spiegeln, Linsen, Strahlteiler, ...) bestehen. Auch die einzelnen optischen Elemente können selbst wiederum aus mehreren Teilen bestehen, also mehrteilig ausgebildet sein.

Damit im Bereich der Interferenzmaxima der Laserstrahlung im Probenvolumen ein Materialabtrag, eine Materialaufschmelzung, eine Phasenumwandlung, eine Photopolymerisierung oder eine andere lokale Änderung der chemischen Eigenschaften (also eine Strukturierung) an der Probe erfolgen kann, muss die in den Interferenzmaxima am Ort der Probe vorliegende Energiedichte der Laserstrahlung geeignet gewählt werden, beispielsweise zwischen 0,1 und 10 J/cm². Dies kann durch geeignete Wahl des Lasers und der optischen Anordnungen der Vorrichtung (insbesondere: Erzielen einer möglichst kleinen Fokusgröße in Richtung der ersten Raumrichtung bei möglichst großer Ausdehnung des Strahls in der zweiten Raumrichtung) realisiert werden.

Die einzelnen optischen Elemente der erfindungsgemäßen Vorrichtung (insbesondere: Die Zylinderlinse(n), der Strahlteiler und die Reflexionselemente bzw. Spiegel) können relativ zueinander verschieblich sein und/oder rotierbar ausgebildet sein, so dass die Parameter (insbesondere: die Periode) der Interferenzstrukturen in Abhängigkeit von den Eigenschaften des verwendeten Lasers und/oder der zu strukturierenden Probe variabel eingestellt werden können.

Eine erfindungsgemäße Vorrichtung zur Interferenzstrukturierung einer flächigen Probe (z.B. eines Halbleitersubstrats oder einer Folie) umfasst einen Laser, eine im Strahlengang des Lasers positionierte Fokussieranordnung und eine im Strahlengang des Lasers nach der Fokussieranordnung positionierte Aufweit- und Auftrennanordnung. Mit der Fokussieranordnung ist der Laserstrahl in einer ersten Raumrichtung fokussiert in ein Probenvolumen, in dem die flächige Probe platziert ist, abbildbar. Mit der Aufweit- und Auftrennanordnung ist der Laserstrahl (unter Beibehalten der fokussierten Abbildung in das Probenvolumen in der ersten Raumrichtung durch die Fokussieranordnung) in einer zweiten Raumrichtung (die nicht identisch mit der ersten Raumrichtung ist und bevorzugt zur ersten Raumrichtung orthogonal ist) aufweitbar und darüberhinaus in zwei Teilstrahlen auftrennbar und in Gestalt dieser beiden Teilstrahlen so auf das Probenvolumen richtbar, dass die beiden Teilstrahlen innerhalb des Probenvolumens in einem Interferenzbereich (in dem die Probe dann strukturiert und/oder photopolymerisiert wird) interferieren.

In einer weiteren vorteilhaften Ausführungsform ist die Fokussieranordnung als den Strahlquerschnitt verändernde Fokussieranordnung ausgebildet, das heißt mit ihr wird der Laserstrahl nicht nur in der ersten Raumrichtung fokussiert in das Probenvolumen abgebildet, sondern ist darüber hinaus auch noch hinsichtlich seines Strahlquerschnitts veränderbar. Bevorzugt handelt es sich bei einer solchen Veränderung um ein bevorzugt variables Aufweiten des Strahlquerschnitts.

Vorzugsweise ist der Laserstrahl mit einer solchen Fokussieranordnung hinsichtlich seines Strahlquerschnitts in zwei zueinander nicht parallele, bevorzugt zueinander orthogonale Raumrichtungen veränderbar bzw. aufweitbar, wobei es sich bei diesen beiden Raumrichtungen bevorzugt um die erste und um die zweite Raumrichtung handelt.

Erfindungsgemäß kann der Laserstrahl mit der Fokussieranordnung zunächst auch in einer weiteren, nicht mit der ersten Raumrichtung zusammenfallenden Raumrichtung (bei dieser handelt es sich bevorzugt um die zweite Raumrichtung) so fokussiert werden, dass er auch in dieser weiteren Raumrichtung fokussiert in das Probevolumen abgebildet werden würde, bevor diese Fokussierung des Laserstrahls in der weiteren Raumrichtung im weiteren Verlauf des Strahlenganges mit der Aufweit- und Auftrennanordnung wieder aufgehoben wird, um das Aufweiten des Strahlengangs in der zweiten Raumrichtung zu ermöglichen. Bei diesen Modifikationen des Laserstrahlengangs in der weiteren Raumrichtung wird jedoch jeweils das fokussierte Abbilden des Laserstrahls in das Probenvolumen in der ersten Raumrichtung aufrechterhalten.

Das Verändern des Strahlquerschnitts (bevorzugt wird der Strahlquerschnitt vergrößert, er kann aber auch verengt werden) durch die Fokussieranordnung kann beispielsweise dadurch realisiert werden, dass diese einen Strahlaufweiter, bevorzugt in Form eines Teleskops, enthält. Insbesondere ist es vorteilhaft, diese Anordnung bzw. das Teleskop so auszubilden, dass der Durchmesser des Laserstrahls variabel eingestellt, also vergrößert (oder ggf. auch verkleinert), werden kann, dass also das Verhältnis des Strahldurchmessers nach und vor der Fokussieranordnung auf unterschiedliche Werte > 1 (oder ggf. auch (oder ggf. auch < 1) eingestellt werden kann.

Die Fokussieranordnung kann jedoch auch so ausgebildet sein, dass sie den Strahlquerschnitt nicht verändert. Bei einer solchen, den Strahlquerschnitt nicht veränderndem Fokussieranordnung handelt es sich im einfachsten Fall um eine einzelne Sammellinse.

Das Teleskop ist vorzugsweise so ausgebildet, dass der Strahlengang erst in zwei zueinander orthogonale Richtungen aufgeweitet (oder verengt) wird und der aufgeweitete (oder verengte) Strahl dann mit beispielsweise einer geeigneten Sammellinse des Teleskops bevorzugt in diese beiden zueinander orthogonalen Richtungen fokussiert auf das Probenvolumen abgebildet wird. Im Strahlengang nach dem Teleskop ist dann eine Zylinderlinse angeordnet, mit der die Fokussierung in einer der beiden vorgenannten Richtungen wieder aufgehoben wird, um das ggf. erneute Aufweiten durch die Aufweit- und Auftrennanordnung (die die Zylinderlinse umfasst) zu ermöglichen. Unter einem Wiederaufheben der Fokussierung wird dabei verstanden, dass ein optisches Element der Aufweit- und Auftrennanordnung im Strahlengang nach der Fokussieranordnung dafür sorgt, dass der Strahlengang in der weiteren (bevorzugt der zweiten) Raumrichtung seine fokussierte Eigenschaft wieder verliert, indem der Strahl beispielsweise mittels einer konkaven Zylinderlinse (Streulinse) wieder defokussiert wird zum Aufweiten des Strahls in dieser Richtung oder indem mit einer konvexen Zylinderlinse (Sammellinse) der Strahl in dieser Richtung zunächst noch stärker fokussiert wird, jedoch eine Aufweitung dadurch erzielt wird, dass die Brennweite der konvexen Zylinderlinse deutlich kleiner gewählt wird, als die Hälfte des Strahlenweges zum sich im Strahlengang hinter der konvexen Zylinderlinse befindenden Probenvolumen.

Erfindungsgemäß wird der Strahlengang bevorzugt zunächst durch eine strahlquerschnittsverändernde Fokussieranordnung einmal aufgeweitet, bevor er mittels der Aufweit- und Auftrennanordnung in der zweiten Raumrichtung noch ein zweites Mal aufgeweitet wird. Somit lassen sich erfindungsgemäß in der zweiten Raumrichtung lange Abschnitte (bis zu 20 bis 40 cm) der Probe mit der Interferenzstruktur zur Probenbearbeitung überdecken. Wird dann die Probe relativ zur erfindungsgemäßen Vorrichtung und senkrecht zur zweiten Raumrichtung (also in der Regel in der ersten Raumrichtung) mit hoher Geschwindigkeit bewegt (beispielsweise mit Hilfe eines Transportbandes oder einer Rolle-zu-Rolle-Transporteinheit), so lassen sich erfindungsgemäß je Zeiteinheit große Probenabschnitte (bis zu 1 m²/s) bearbeiten.

Vorteilhafterweise kann der Laserstrahl mit der Fokussieranordnung in zwei zueinander nicht parallele, bevorzugt zueinander orthogonale Raumrichtungen querschnittverändert (vorzugsweise aufgeweitet) werden, die dann vorzugsweise mit der ersten und der zweiten Raumrichtung übereinstimmen.

Vorzugsweise wird zudem der Laserstrahl mit der Fokussieranordnung zunächst in diese beiden zueinander nicht parallelen Raumrichtungen aufgeweitet, bevor er danach in die erste Raumrichtung fokussiert wird und mit dieser Fokussierung in das Probenvolumen abgebildet wird.

Die Aufweit- und Auftrennanordnung umfasst mindestens eines, bevorzugt mehrere (oder auch alle) der folgenden optischen Elemente: eine oder mehrere Zylinderlinse(n) zum Aufweiten des Laserstrahls oder der beiden Teilstrahlen in der zweiten Raumrichtung, einen Strahlteiler (insbesondere einen halbdurchlässigen Spiegel) zum Auftrennen des Laserstrahls in die zwei Teilstrahlen und ein oder mehrere Reflexionselement(e) (die vorzugsweise als Planspiegel ausgebildet sind), um die beiden Teilstrahlen so auf das Probenvolumen zu richten, dass sie innerhalb des Probenvolumens im Interferenzbereich interferieren.

Unterschiedliche Abfolgen der einzelnen optischen Elemente der erfindungsgemäßen Vorrichtung sind möglich:
So kann die Aufweit- und Auftrennanordnung im Strahlengang zunächst ein erstes optisches Element insbesondere in Form einer Zylinderlinse aufweisen, mit dem das erneute Aufweiten realisiert wird. Im Strahlengang folgt dann ein zweites optisches Element insbesondere in Form eines Strahlteilers, mit dem der Laserstrahl in die beiden Teilstrahlen aufgetrennt wird. Schließlich folgen im Strahlengang dritte optische Elemente bevorzugt in Form von Reflexionselementen (insbesondere: Planspiegel), um die beiden Teilstrahlen auf das Probenvolumen zu richten, in dem sie dann im Interferenzbereich interferieren.

Das erste optische Element kann dabei insbesondere eine konvexe Zylinderlinse umfassen, die den Strahlengang auf das einen Strahlteiler umfassende zweite optische Element führt. Dabei ist bevorzugt sowohl die Brennweite *f_{zyl}* der konvexen Zylinderlinse kleiner als der optische Weg im Strahlengang zwischen der Zylinderlinse und dem Strahlteiler, als auch der optische Weg im Strahlengang zwischen der Zylinderlinse einerseits und dem Ort des Fokus im Probenvolumen (gemeint ist hier der Fokus in der ersten Raumrichtung) andererseits um mehr als den Faktor 2, bevorzugt um mindestens den Faktor 5 (vorzugsweise um einen Faktor von mindestens 10) größer als die Brennweite *f_{zyl}* der Zylinderlinse.

Das erste optische Element kann aber auch eine konvexe Zylinderlinse umfassen und den Strahlengang auf das einen Strahlteiler umfassende zweite optische Element so abbilden, dass die Brennweite der Zylinderlinse größer ist als der optische Weg im Strahlengang zwischen der Zylinderlinse und dem Strahlteiler (in diesem Fall liegt dann der Fokus der Zylinderlinse hinter dem Strahlteiler, wohingegen er im vorbeschriebenen Fall vor dem Strahlteiler liegt). Auch in diesem Fall kann dann der optische Weg im Strahlengang zwischen der Zylinderlinse einerseits und dem Fokus in der ersten Raumrichtung im Probenvolumen andererseits um mindestens den Faktor 2, bevorzugt mindestens den Faktor 5, bevorzugt um mindestens den Faktor 10 größer sein als die Brennweite der Zylinderlinse.

In einer dritten Möglichkeit kann jedoch das erste optische Element auch eine konkave Zylinderlinse umfassen: In diesem Fall wird der Strahl entsprechend der Eigenschaften der verwendeten zerstreuenden Zylinderlinse bereits aufgeweitet auf den Strahlteiler als zweites optisches Element geführt, bevor er dann durch den weiteren optischen Weg bis zum Probevolumen noch stärker aufgeweitet wird.

Alternativ zu den vorbeschriebenen optischen Anordnungen der erfindungsgemäßen Vorrichtung ist es jedoch auch möglich, dass die Aufweit- und Auftrennanordnung im Strahlengang zunächst ein erstes optisches Element bevorzugt in Form eines Strahlteilers aufweist, so dass zunächst der Laserstrahl in die beiden Teilstrahlen aufgetrennt wird. Im Strahlengang danach folgen dann mehrere z.B. als Reflexionselemente, insbesondere: Planspiegel, ausgebildete zweite optische Elemente, um die beiden Teilstrahlen so auf das Probenvolumen zu richten, dass sie innerhalb desselben im Interferenzbereich interferieren. Die zur Interferenz führende Einstrahlrichtung ist dann für die beiden Teilstrahlen bereits gegeben, wenn schließlich im Strahlengang dieser beiden Teilstrahlen die dritten optischen Elemente beispielsweise in Form von Zylinderlinsen folgen, die dann in jedem der Teilstrahlengänge das erneute Aufweiten des Strahlengangs bewirken. Hierbei ist zu beachten, dass sich die Angabe des erfindungsgemäßen Aufweitens in der zweiten Raumrichtung auf die Ausrichtung der Oberfläche der Probe beziehen kann, so dass diese Formulierung ein Aufweiten zweier unter unterschiedlichen Einfallsrichtungen auf die Probe eintreffender Teilstrahlen nicht ausschließt.

Die beiden dritten optischen Elemente können bevorzugt identisch ausgebildete konvexe Zylinderlinsen sein, die jeweils einen der beiden Teilstrahlen in das Probenvolumen abbilden. Für beide Zylinderlinsen kann dabei die Brennweite *f_{zyl}* jeweils um mehr als den Faktor 2 (bevorzugt noch um einen deutlich höheren Faktor, z.B. mindestens den Faktor 5 oder 10) kleiner sein als der optische Weg im jeweiligen Teilstrahlengang zwischen der Zylinderlinse des Teilstrahlengangs einerseits und dem Ort des Fokus im Probenvolumen (gemeint ist hier die Fokussierung in der ersten Raumrichtung) andererseits.

Alternativ dazu können die beiden dritten optischen Elemente jedoch auch bevorzugt identisch ausgebildete konkave Zylinderlinsen sein, die jeweils einen der beiden Teilstrahlen unmittelbar aufgeweitet (d.h. ohne vorherigen Fokussierung und erneute Defokussierung) in das Probenvolumen abbilden.

Vorzugsweise weist eine erfindungsgemäße Vorrichtung zusätzlich eine Bewegungseinheit (beispielsweise ein Förderband oder eine rollenbasierte Transportvorrichtung) auf, mit der die Probe oder zumindest Abschnitte derselben im Probenvolumen oder durch das Probenvolumen hindurch bewegt werden kann/können. Die Bewegung erfolgt dabei vorzugsweise senkrecht zur Aufweitungsrichtung (also zur zweiten Raumrichtung), also in der Regel in die erste Raumrichtung. Dies hat den Vorteil, dass die Vorrichtung zur Interferenzstrukturierung (beispielsweise in einem Bearbeitungskopf) kompakt, also mit vergleichsweise geringen Außenmaßen realisiert werden kann. Werden die nachfolgend beschriebenen Ausführungsbeispiele in dieser Form realisiert, so sind die einzelnen optischen Elemente der Anordnung während der Bearbeitung der Probe fest im kartesischen Weltkoordinatensystem x, y, z angeordnet (y ist dabei als erste Raumrichtung gewählt, x oder die in der xz-Ebene liegende Koordinate bzw. Richtung w bildet die zweite Raumrichtung) und die Probe P wird relativ zu diesem Weltkoordinatensystem bewegt.

Alternativ dazu ist es jedoch auch möglich, nicht die Probe, sondern den Laserstrahl bzw. die beiden Teilstrahlen zu bewegen: Hierzu kann/können die Fokussieranordnung und/oder die Aufweit- und Auftrennanordnung so ausgebildet sein (beispielsweise durch translatierbare und/oder rotierbare Reflexionselemente, Strahlteiler und/oder Linsen in einer geeigneten Galvanoscannerkonfiguration), dass die beiden Teilstrahlen relativ zur im Weltkoordinatensystem gesehen feststehend angeordneten flächigen Probe ausgelenkt werden.

Insbesondere die Variante der feststehenden Vorrichtung mit relativ dazu bewegter Probe eignet sich zur Integrierung in eine Fertigungsanlage oder Fertigungsstraße.

Vorzugsweise werden erfindungsgemäß gepulste Laser eingesetzt, die im ultravioletten, im sichtbaren Bereich oder auch im infraroten emittieren können. Beispielsweise kann ein Nd:YAG-Laser mit einer Wellenlänge von 355 nm, einer Pulsenergie von 1 mJ, einer Pusfrequenz von 20 kHz und einer Pulshalbwertsbreite von 8 ns eingesetzt werden.

Die vorliegende Erfindung beschreibt somit den Aufbau einer Vorrichtung bzw. eines optischen Systems zum Erzeugen von ein- oder zweidimensionalen Interferenzmustern für die direkte Strukturierung unterschiedlicher Probenmaterialien.

Im Vergleich zu den Strukturierungssystemen aus dem Stand der Technik ermöglicht die vorliegende Erfindung eine einfache und schnelle Strukturierung von langen Substraten, wie beispielsweise Folien z.B. in einer Rolle-zu-Rolle-Konfiguration. Somit lässt sich, im Vergleich zum Stand der Technik, insbesondere auch die Zahl benötigter Lineartische zum Bewegen der Probe reduzieren, weil die Ausdehnung des Laserstrahls auf dem Substrat (wo die Teilstrahlen interferieren) größer oder gleich der Ausdehnung der zu bearbeitenden Probe sein kann (so dass ggf. auf ein laterales Verschieben des Strahls oder der Probe verzichtet werden kann).

In Abhängigkeit von der maximalen Pulsenergie des verwendeten Lasersystems (die Vorrichtung kann auch zur flexiblen Verwendung unterschiedlicher Lasersysteme bzw. zum Austausch derselben ausgebildet werden), können die Form des Laserstrahls und auch der Einstrahlwinkel Θ (vgl. nachfolgend) der beiden Teilstrahlen variabel eingestellt werden, so dass je nach zu bearbeitender Oberfläche die notwendige Energie zum Strukturieren variabel gewählt werden kann. Dabei kann in jedem Fall eine sehr große Ausdehnung der eingestrahlten Strahlung in eine Projektionsrichtung (zweite Raumrichtung) erzielt werden. Somit kann eine hohe Laserenergie pro Fläche gewonnen werden, gleichzeitig kann die Strukturierung von großen Substraten unter Verwendung von nur einer Bewegungsrichtung durchgeführt werden.

Durch einen ersten Aufweitungsschritt (in einer strahlquerschnittaufweitenden Fokussieranordnung, insbesondere in einem entsprechenden Teleskop) kann, z.B. durch Variation des Abstandes zweier Linsen im Teleskop, mit der vorliegenden Erfindung eine hohe Flexibilität für verschiedene Lasersysteme erreicht werden, d.h. die erfindungsgemäße Vorrichtung an den verwendeten Laser angepasst werden, bevor dann in einem zweiten Aufweitungsschritt (mit der Aufweit- und Auftrennanordnung) eine sehr große Ausdehnung des Laserstrahlbündels in die zweite Raumrichtung erreicht werden kann.

Gegenüber den aus dem Stand der Technik bekannten Prismenaufbauten hat die vorliegende Erfindung insbesondere den Vorteil, dass der für die Periode der zu erzielenden Struktur entscheidende Einstrahlwinkel Θ der beiden Teilstrahlen praktisch frei wählbar ist. Um eine vergleichbare Ausdehnung in der zweiten Raumrichtung von 20 bis 40 cm zu erzielen, wären zudem sehr große (und schwere, nur sehr aufwändig herstellbare) Prismen notwendig, die wiederum eine große Baulänge bedingen würden. Die vorliegende Erfindung hat demgegenüber somit den Vorteil, dass die entsprechende Bearbeitung günstiger und mit einem kompakteren Aufbau möglich ist.

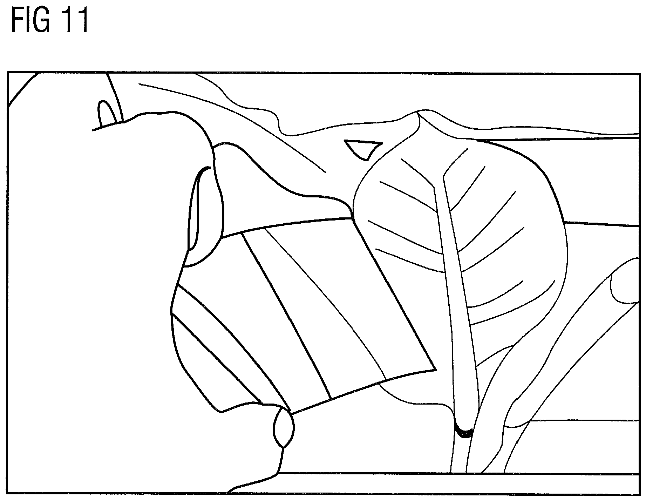

Aufgrund einer Homogenisierung des Laserstrahls wegen der starken Fokussierung in einer Richtung (erste Raumrichtung) ist erfindungsgemäß auch eine hohe Ästhetik der strukturierten Bauteile möglich, so dass die Nutzung der Erfindung insbesondere auch zum Strukturieren dekorativer Elemente möglich ist (vgl. Figur 11). Die Erfindung ermöglicht somit das Strukturieren unterschiedlichster Materialien, so dass ihre Anwendung im Bereich der Tribologie, der Optik, der Mechanik und der Bearbeitung biologischer Proben möglich ist. Insbesondere können große Substrate (beispielsweise Solarzellen und OLEDs) mit vergleichsweise geringem Aufwand und schnell strukturiert werden, wobei eine Integration der erfindungsgemäßen Vorrichtung in den Inline-Betrieb ohne weiteres möglich ist. Da die Ausdehnung des Laserstrahls in die zweite Raumrichtung sehr groß ist, können kompakte optische Arbeitsköpfe entwickelt werden, die auf Bearbeitungsstationen fixiert sind.

Nachfolgend wird die vorliegende Erfindung anhand mehrerer Ausführungsbeispiele beschrieben. Dabei zeigen:
- Figur 1: Strukturierungsverfahren nach dem Stand der Technik.
- Figur 2: eine erste erfindungsgemäße Vorrichtung.
- Figur 3: eine zweite erfindungsgemäße Vorrichtung.
- Figur 4a: eine dritte erfindungsgemäße Vorrichtung.
- Figur 4b: eine vierte erfindungsgemäße Vorrichtung.
- Figur 4c: eine fünfte erfindungsgemäße Vorrichtung.
- Figur 5a: eine sechste erfindungsgemäße Vorrichtung.
- Figur 5b: eine siebte erfindungsgemäße Vorrichtung.
- Figur 6: eine achte erfindungsgemäße Vorrichtung.
- Figur 7: eine neunte erfindungsgemäße Vorrichtung.
- Figur 8: eine zehnte erfindungsgemäße Vorrichtung.
- Figuren 9a und 9b: mit den erfindungsgemäßen Vorrichtungen erzielbare Interferenzstrukturen.
- Figur 10: den Einsatz der erfindungsgemäßen Vorrichtungen im Inline-Betrieb verschiedener Produktionsstraßen.
- Figur 11: eine erfindungsgemäß strukturierte PI-Folie (Fokusausdeh-nung des Laserstrahls in die erste Raumrichtung: 30 µm, Ausdehnung des Laserstrahls in die zweite Raumrichtung: 70 mm).

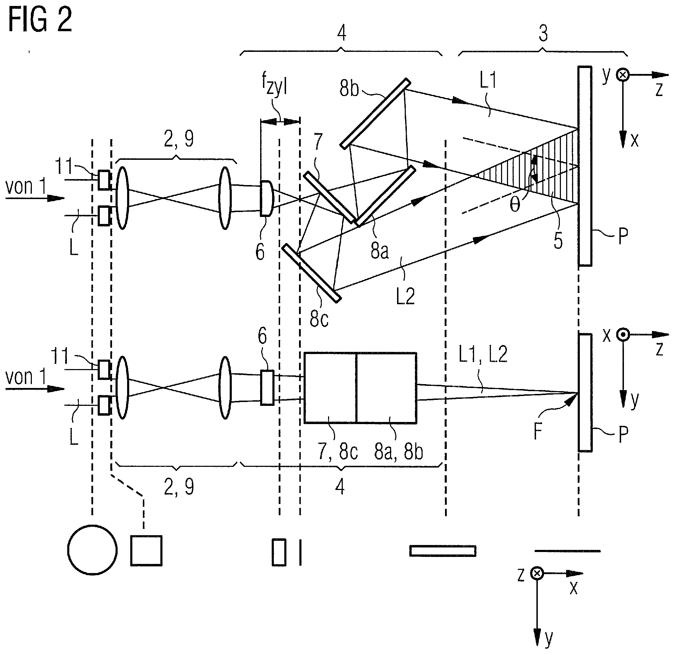

In den nachfolgenden Figuren 2 bis 8 werden verschiedene konkrete Ausführungsbeispiele der erfindungsgemäßen Vorrichtung gezeigt. Die Vorrichtungen sind dabei jeweils ortsfest im kartesischen Welt-Koordinatensystem x, y, z angeordnet, wobei die y-Richtung die erste Raumrichtung ist, in der der Laserstrahl L fokussiert in das Probenvolumen 3 abgebildet wird. Die Bewegung der Probe P erfolgt jeweils in die erste Raumrichtung y. Ist in einzelnen dieser Ausführungsbeispiele die Fokussieranordnung als den Strahlquerschnitt verändernde Fokussieranordnung (insbesondere: mit Hilfe eines Teleskops) ausgebildet, mit der sich bereits eine erste Aufweitung des Strahlquerschnitts erzielen lässt, so ist die Fokussieranordnung in diesen Fällen auch als Aufweit- und Fokussieranordnung 2 bezeichnet.

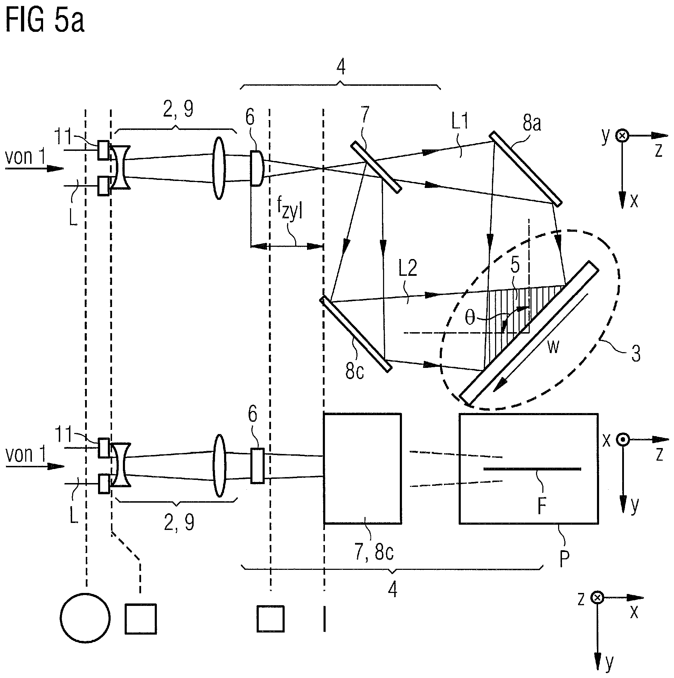

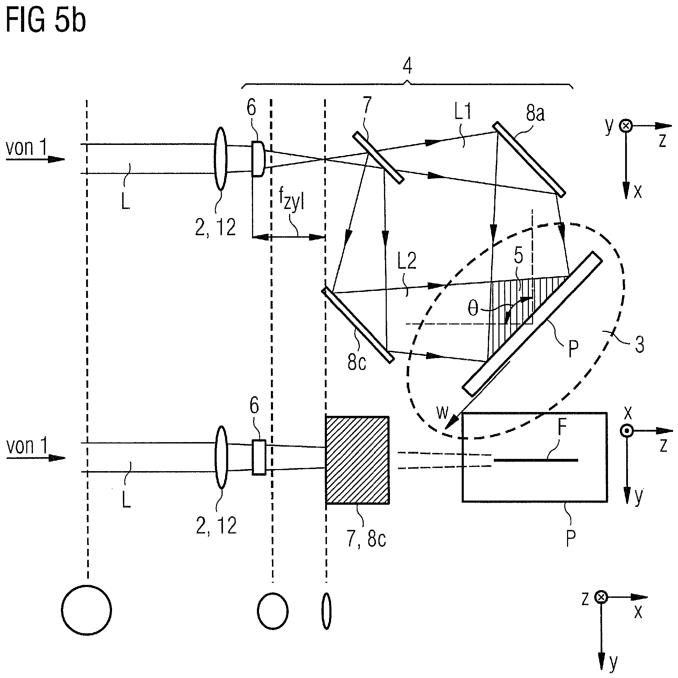

In den Ausführungsbeispielen der Figuren 2 bis 4c und 6 bis 8 ist die x-Richtung diejenige Richtung, in der der Laserstrahl in der Aufweit- und Auftrennanordnung 4 aufgeweitet wird. In Figuren 5a und 5b ist die Probe P bzw. deren zu bearbeitende Oberfläche (anders als in den Figuren 2 bis 4c und 6 bis 8, wo die Probe P parallel zur xy-Ebene angeordnet ist) parallel zur y-Richtung, jedoch verkippt zur xy-Ebene angeordnet, so dass die zweite Raumrichtung w (parallel zur Oberfläche der Probe P) hier eine in der xz-Ebene liegende Richtung, also senkrecht zur y-Richtung liegende Richtung ist, die jedoch nicht mit der x-Richtung übereinstimmt.

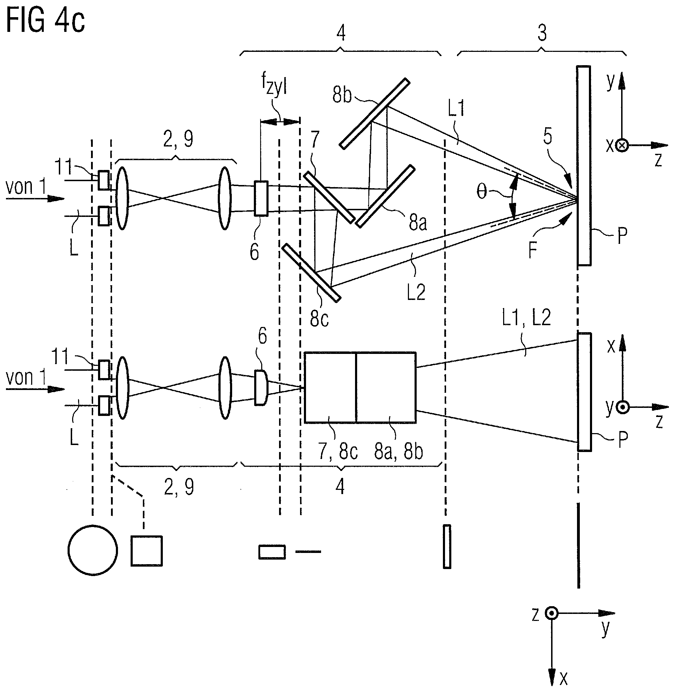

Die Figuren 2 bis 8 (mit Ausnahme der Figur 4c) zeigen für jedes der Ausführungsbeispiele jeweils in drei Zeilen von oben nach unten die Anordnung der einzelnen Elemente der erfindungsgemäßen Vorrichtungen und die flächige Probe P in einer Ebene senkrecht zur ersten Raumrichtung y (erste Zeile) und in einer Ebene parallel zur ersten Raumrichtung y (zweite Zeile) und den Strahlquerschnitt bzw. die Strahlform des Laserstrahls an unterschiedlichen Positionen entlang der optischen Hauptstrahlachse (z-Richtung) in der dritten Zeile. In Figur 4c ist die Rolle der ersten und der zweiten Zeile vertauscht. Die optische Hauptachse z ist dabei in den Figuren 2 bis 4c und 6 bis 8 senkrecht zur Oberfläche der Probe P ausgerichtet.

In der ersten Ausführungsform (Figur 2) wird der Laserstrahl L eines hier nicht gezeigten gütegeschalteten, diodengepumpten Lasers 1 (5 kHz, Leistung 5W, Pulsdauer 30 ns) zunächst mit einer quadratischen Blende 11 (Seitenlänge der Blendenöffnung: 5 mm) homogenisiert (Abschneiden der abfallenden Randflanken des im Wesentlichen gaußförmigen Strahlprofils) und auf ein im Strahlengang nach der Blende 11 angeordnetes Teleskop 9 als Aufweit- und Fokussieranordnung 2 eingestrahlt. Das Teleskop 9 umfasst hier zwei Sammellinsen. Durch Variation des Abstandes dieser beiden Sammellinsen entlang der Hauptstrahlrichtung z lässt sich das Verhältnis der Seitenlängen des quadratischen Strahls auf der Strahlausgangsseite des Teleskops 9 und auf der Strahleingangsseite des Teleskops 9 variabel einstellen, die Strahlausdehnung in den beiden Richtungen x und y senkrecht zur Einstrahlrichtung z somit variabel einstellen. Das Teleskop 9 bzw. die Brennweite der ausgangsseitigen Sammellinse des Teleskops ist so ausgebildet, dass der aufgeweitete Strahl L strahlausgangsseitig des Teleskops durch dieses (bei Berücksichtigung der optischen Weglängen der beiden Teilstrahlen L1 und L2 über die nachfolgend beschriebenen weiteren optischen Elemente 6, 7, 8 im Strahlengang) sowohl in x-Richtung als auch in y-Richtung auf die zu bearbeitende Oberfläche der im Probenvolumen 3 angeordneten Probe P fokussiert wird. Die Probe P kann im Probenvolumen 3 jedoch auch außerhalb des Ortes der Fokussierung angeordnet sein.

Im Strahlengang hinter dem Teleskop 9 ist eine konvexe Zylinderlinse 6 mit ihrer fokussierenden Achse entlang der ersten Raumrichtung y, also so angeordnet, dass der bereits in die beiden Richtungen x und y fokussierte Laserstrahl L in die zweite Raumrichtung x erneut fokussiert wird (wobei durch dieses Ausrichten der Längsachse der Zylinderlinse 6 die Fokussierung in die erste Raumrichtung y beibehalten wird). Die Brennweite f_{zyl} der Zylinderlinse 6 ist dabei so gewählt, dass für beide Teilstrahlen (siehe nachfolgend L1 und L2) das Verhältnis der optischen Weglänge von der Zylinderlinse 6 zur zu bearbeitenden Probenoberfläche der Probe P einerseits und der Brennweite f_{zyl} andererseits deutlich größer als 2 ist, hier etwas 12 beträgt.

Etwa im 1,5-fachen Abstand der Brennweite f_{zyl} ist im Strahlengang hinter der Zylinderlinse ein halbdurchlässiger Spiegel 7 (Strahlteiler) angeordnet, mit dem der Strahlengang L des Lasers auf zwei Teilstrahlen L1 und L2 aufgeteilt wird. Die Zylinderlinse 6 bildet den Laserstrahl L somit so auf den halbdurchlässigen Spiegel 7 ab, dass der Fokuspunkt der Zylinderlinse in Strahlrichtung gesehen vor dem halbdurchlässigen Spiegel 7 liegt.

Der transmittierte Teilstrahlengang L1 des halbdurchlässigen Spiegels 7 wird an einem ersten Planspiegel 8a reflektiert, fällt auf einen zweiten Planspiegel 8b und wird von dort in das Probenvolumen 3, in dem die zu bearbeitende Probe P angeordnet ist, eingestrahlt. Der am halbdurchlässigen Spiegel 7 reflektierte Teilstrahlengang L2 fällt auf einen dritten Planspiegel 8c und wird von dort in das Probenvolumen 3 bzw. auf die zu bearbeitende Oberfläche der Probe P gelenkt. Der halbdurchlässige Spiegel 7 (Strahlteiler) sowie die drei Planspiegel 8a bis 8c sind dabei im Ortsraum x, y, z so positioniert und ausgerichtet, dass die beiden Teilstrahlen L1 und L2 unter einem Winkel Θ > 0° (hier z.B. 30°) interferierend auf die zu bearbeitende Oberfläche der Probe P eingestrahlt werden. In der Schnittebene zwischen den Interferenzbereich (5) und der Probe (P) erfolgt somit eine Strukturierung der Probenoberfläche. Die beiden Teilstrahlengänge L1 und L2 sind hier - bezogen auf die jeweiligen Zentralstrahlen -vom Spiegel 7 bis zur Oberfläche der Probe P gleich lang (dies muss aber nicht der Fall sein).

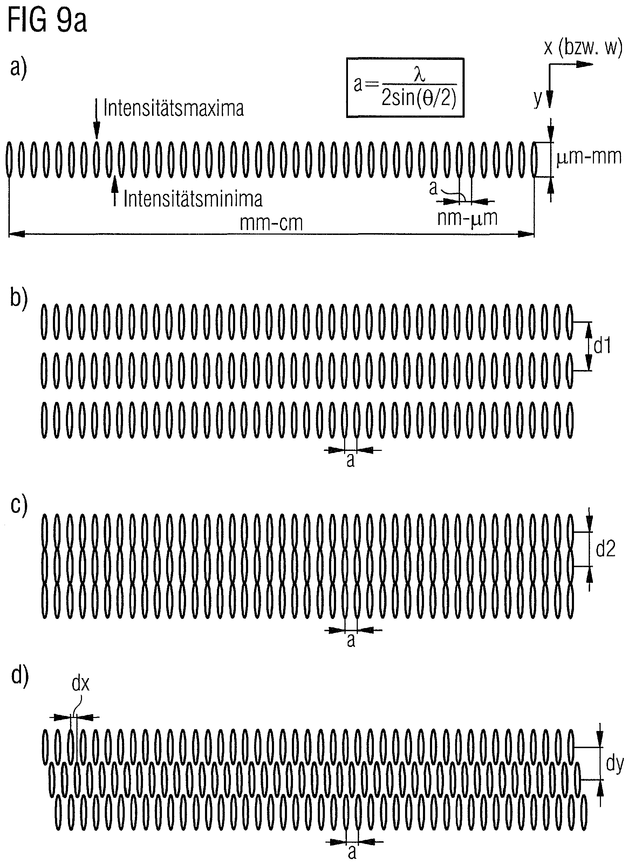

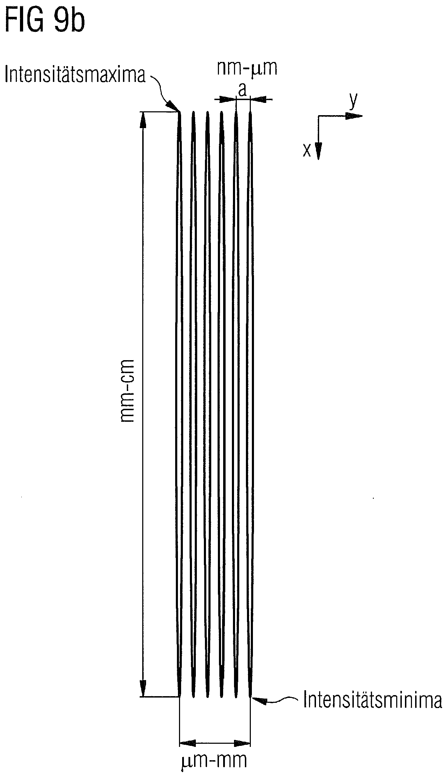

Durch die erste Aufweitung mittels des Teleskops 9 in x- und y-Richtung sowie durch die weitere Aufweitung mittels der Zylinderlinse 6 in x-Richtung aufgrund der im Vergleich zur gesamten optischen Weglänge nach der Linse 6 sehr viel kleineren Brennweite f_{zyl} dieser Linse 6 erfolgt, bei Beibehaltung der Fokussierung des Laserstrahls L bzw. L1, L2 in y-Richtung (vgl. Fokus F in der mittleren Zeile der Figur), eine Aufweitung in x-Richtung auf etwa 10 cm. Es ergibt sich somit ein großer Interferenzbereich 5 im Probenvolumen 3, so dass in x-Richtung gesehen ein vergleichsweise großer Abschnitt der Probe P auf einmal bearbeitet werden kann. Ein Weitertransport der Probe P in y-Richtung (hier nicht gezeigt) ermöglicht dann die flächige Bearbeitung der Probe (vgl. auch Figur 9).

Die Aufweit- und Auftrennanordnung 4 umfasst somit die Zylinderlinse 6, den halbdurchlässigen Spiegel 7 sowie die Reflexionselemente 8a, 8b und 8c.

In einer Variante der Ausführungsform aus Figur 2 (nicht gezeigt) ist der Aufbau zu dem in Figur 2 gezeigten Aufbau identisch mit der Ausnahme, dass das Verhältnis der Brennweite f_{zyl} der Zylinderlinse zur optischen Weglänge von der Zylinderlinse 6 zum halbdurchlässigen Spiegel 7 größer als 1 ist. In diesem Fall erfolgt die letztendlich zur weiteren Aufweitung führende Fokussierung der Laserstrahlung in die zweite Raumrichtung x also dergestalt, dass der Fokus der Zylinderlinse 6 im Strahlengang hinter dem halbdurchlässigen Spiegel 7 liegt. Da jedoch auch hier die optische Weglänge zwischen der Zylinderlinse 6 und der zu bearbeitenden Probenoberfläche um beispielsweise den Faktor 5 oder 10, also um deutlich mehr als den Faktor 2, größer ist als die Brennweite f_{zyl}, wird auch hier durch die Zylinderlinse 6 nach erfolgter Fokussierung durch die erneute Defokussierung eine starke Aufweitung der Laserstrahlung in die zweite Raumrichtung x erzielt. (Sofern die Weglänge in den beiden Teilstrahlengängen L1 und L2 nicht identisch ist, ist als optische Weglänge zwischen Zylinderlinse 6 und Probenoberfläche P - wie auch in allen anderen Ausführungsformen - die mittlere Weglänge (L1 + L2)/2 gemeint.)

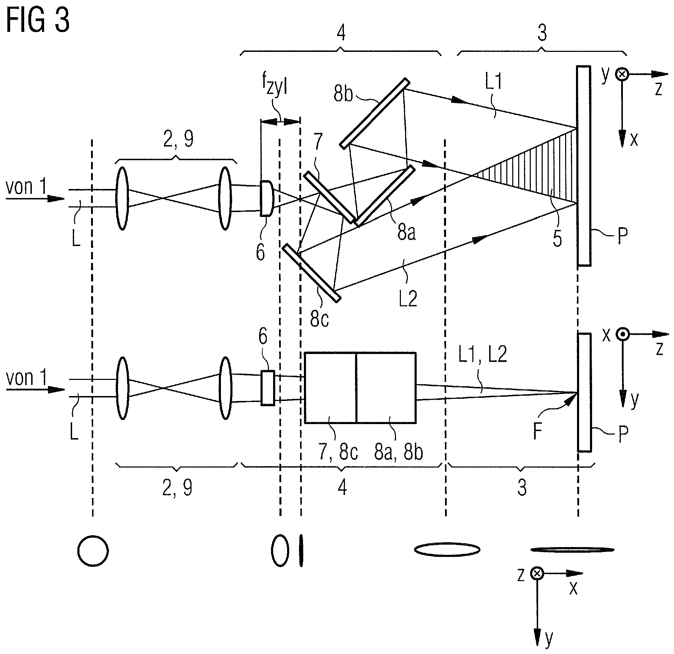

Figur 3 zeigt eine zweite Ausführungsform gemäß der Erfindung, die grundsätzlich wie die in Figur 2 gezeigte Ausführungsform ausgebildet ist, so dass hier nur die Unterschiede beschrieben werden. In Figur 3 entfällt die quadratische Blende 11, so dass der Laserstrahl L des Lasers 1 ohne vorher beschnitten zu werden auf das Teleskop 9 abgebildet wird. Auch hier ist der Strahldurchmesser mit Hilfe des Teleskops (Variation des Linsenabstands im Teleskop 9) einstellbar. Der Vorteil der in Figur 3 gezeigten Anordnung ist die Vermeidung von Intensitätsverlusten durch die Beschneidung des Strahls durch die Blende 11. Demgegenüber hat die in Figur 2 gezeigte Anordnung den Vorteil, dass die Intensität über den gesamten Strahlquerschnitt nach der Blende praktisch konstant ist, so dass sich nach der optischen Abbildung 9, 6, 7 und 8a bis 8c über die gesamte Ausdehnung des Interferenzbereichs 5 im Probenvolumen in x-Richtung eine praktisch konstante Intensität ergibt. Sämtliche Bereiche der Probe P, die durch die Interferenz strukturiert werden, werden somit auf identische Art und Weise strukturiert (so wird beispielsweise eine geringere Eindringtiefe der Strukturen zum Rand des Interferenzbereichs 5 hin, im Vergleich zur Mitte desselben, vermieden).

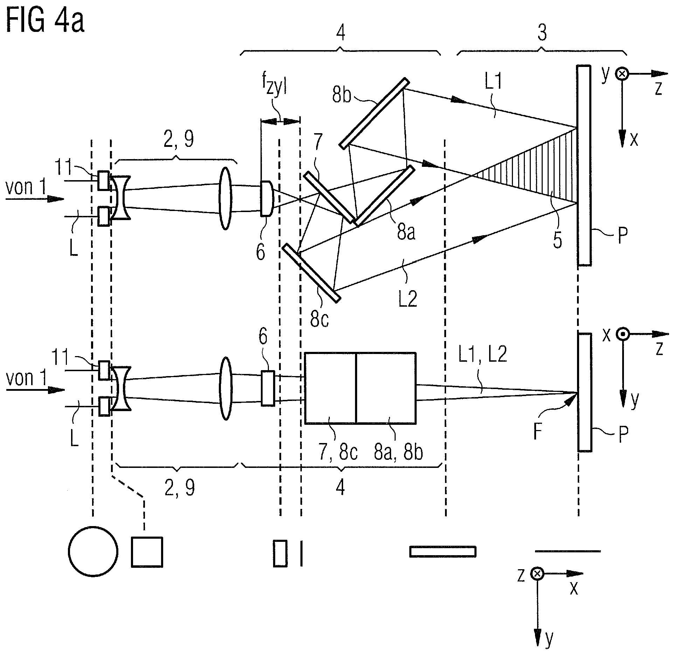

Auch die in Figur 4a gezeigte dritte Ausführungsform der Erfindung ist identisch zur in Figur 2 gezeigten Ausführungsform ausgebildet mit lediglich dem nachfolgend beschriebenen Unterschied: In Figur 4a wird anstelle eines zwei konvexe Sammellinsen umfassenden Teleskops ein Teleskop 9 eingesetzt, bei dem im Strahlengang zunächst eine konkave Streulinse und anschließend eine konvexe Sammellinse angeordnet ist.

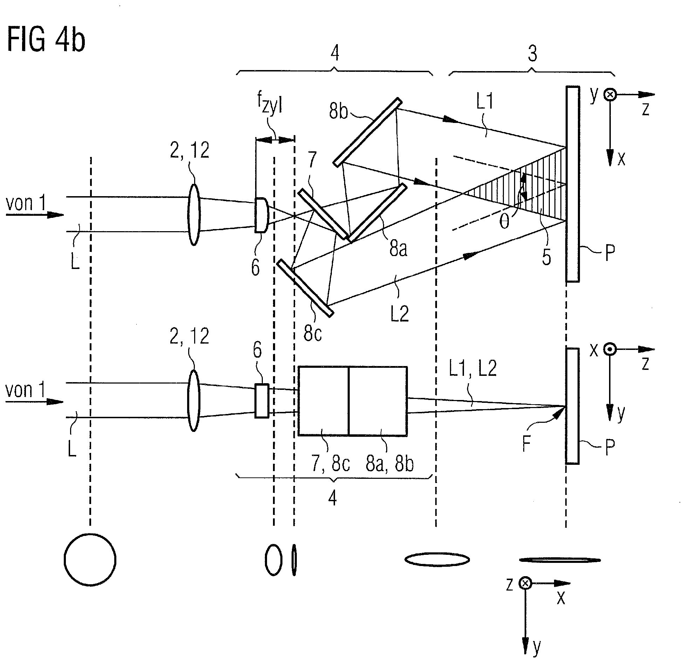

Die in Figur 4b gezeigte vierte Ausführungsform der Erfindung ist ebenfalls identisch zur in Figur 2 gezeigten Ausführungsform ausgebildet mit Ausnahme der nachfolgend beschriebenen Unterschiede: In Figur 4b entfällt, ebenso wie in Figur 3, die Blende 11. Zudem ist in Figur 4b anstelle der in Figur 2 verwendeten Aufweit- und Fokussieranordnung 2 in Form eines Teleskops 9 eine einfache Sammellinse 12 als (den Strahlquerschnitt nicht verändernde) Fokussieranordnung 2 eingesetzt. Mit Hilfe dieser Sammellinse 12 wird somit der Strahl L des Lasers 1 sowohl in die erste Raumrichtung y als auch in die zweite Raumrichtung x zunächst fokussiert in das Probenvolumen 3 abgebildet, bevor der dergestalt fokussierte Laserstrahl L auf die Zylinderlinse 6 geführt wird, mit der, wie vorbeschrieben, die Fokussierung in die zweite Raumrichtung x zum Aufweiten des Strahlengangs in der zweiten Raumrichtung x wieder aufgehoben wird (unter Beibehalten der fokussierten Abbildung in der ersten Raumrichtung y).

Die in Figur 4c gezeigte fünfte Ausführungsform der Erfindung ist ebenfalls identisch zur in Figur 2 gezeigten Ausführungsform ausgebildet mit Ausnahme der Orientierung der Zylinderlinse 6 relativ zur Anordnung 7, 8a bis 8c der Aufweit- und Auftrennanordnung 4. Die Längsachse der Zylinderlinse 6 liegt somit im Gegensatz zur Figur 2, wo diese Längsachse senkrecht zu dem von den beiden Teilstrahlen L1 und L2 aufgespannten Ebene (in Figur 2 die x-z-Ebene) ausgerichtet ist, hier parallel zur durch die beiden Teilstrahlen L1 und L2 (bzw. deren Zentralstrahlen, vergleiche die Strichelung in Figur 4c) aufgespannten Ebene. Der Winkel, unter dem die beiden Teilstrahlen L1 und L2 interferieren, ist hier ebenfalls mit Θ bezeichnet. Die Aufweitung des Laserstrahl L bzw. der beiden Teilstrahlen L1 und L2 erfolgt hier somit senkrecht zu der durch die beiden Teilstrahlen L1 und L2 aufgespannten Ebene (der y-z-Ebene), also in der x-z-Ebene, vergleiche Figur 4c mittlere Zeile. (Zur Form der damit erzeugten Interferenzstrukturen vergleiche Figur 9b).

Auch die in Figur 5a gezeigte Ausführungsform ist grundsätzlich in ihrem Aufbau mit der in Figur 2 gezeigten Ausführungsform identisch, so dass erneut lediglich die Unterschiede beschrieben werden. In der in Figur 5a gezeigten Ausführungsform erfolgt die Strahlführung nach dem halbdurchlässigen Spiegel 7 der Aufweit- und Auftrennanordnung 4 auf Basis lediglich zweier Reflexionsspiegel 8a und 8c, der dritte Reflexionsspiegel 8b im ersten Teilstrahlengang L1 entfällt. In jedem der beiden Teilstrahlengänge L1 und L2 wird der entsprechende Teilstrahl somit mittels genau eines Reflexionsspiegels 8 um hier 90° umgelenkt (auch andere Winkel sind möglich), bevor der jeweilige Teilstrahl auf die zu bearbeitende Oberfläche der Probe P trifft. Die beiden Teilstrahlen L1 und L2 fallen somit hier relativ zueinander unter einem Schnittwinkel von Θ = 90° (der Winkel bezieht sich hier, wie auch in den anderen Ausführungsbeispielen, auf die Hauptstrahlachse im jeweiligen Teilstrahlengang) auf die Probenoberfläche ein. Die Probenoberfläche P ist hier parallel zur ersten Raumrichtung y ausgerichtet, liegt im Vergleich zum in Figur 2 gezeigten Fall nun jedoch nicht mehr parallel zur xy-Ebene, sondern um z.B. 45° verkippt hierzu. Die zweite Raumrichtung w, in der hier im Interferenzbereich 5 die maximale Aufweitung erreicht ist, liegt hier somit zwar nach wie vor senkrecht zur ersten Raumrichtung y, ist nunmehr jedoch um z.B. 45° um diese erste Raumrichtung y relativ zur x-Achse im Gegenuhrzeigersinn verdreht.

Die in Figur 5b gezeigte Ausführungsform ist grundsätzlich mit der in Figur 5a gezeigten Ausführungsform identisch mit Ausnahme der verwendeten Fokussieranordnung 2: Anstelle der in Figur 5a eingesetzten Aufweit- und Fokussieranordnung 2 in Form eines Teleskops 9, mit der bereits eine erste Strahlaufweitung realisiert ist, ist im Strahlengang L vor der Zylinderlinse 6 in Figur 5b eine einfache Sammellinse 12 angeordnet, mit der der Laserstrahl L zunächst in den beiden Raumrichtungen y und w fokussiert abgebildet wird, bevor dann zur erstmaligen Aufweitung des Strahlengangs L die Fokussierung in der zweiten Raumrichtung w durch die Zylinderlinse 6 wieder aufgehoben wird. In Figur 5b erfolgt somit - im Gegensatz zur zweimaligen Aufweitung durch das Teleskop 9 und die Strahlführung nach der Zylinderlinse 6 in Figur 5a - lediglich eine einmalige Aufweitung des Strahlengangs durch die Strahlführung hinter der Zylinderlinse 6.

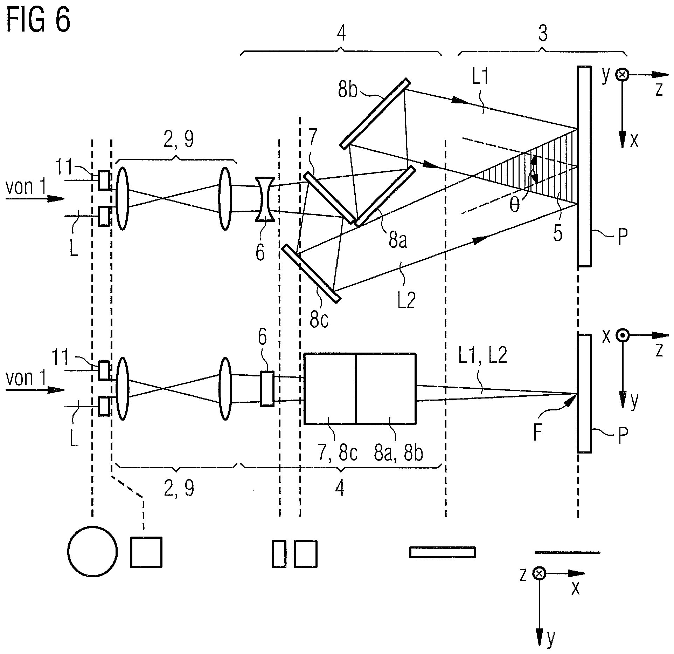

Auch die in Figur 6 gezeigte achte Ausführungsform der Erfindung ist grundsätzlich wie die in Figur 2 gezeigte Ausführungsform ausgebildet, so dass wiederum nur die Unterschiede beschrieben werden. Anstelle der konvexen Zylinderlinse 6 im Strahlengang zwischen dem Teleskop 9 und dem halbdurchlässigen Spiegel 7, weist die Aufweit- und Auftrennanordnung 4 dieses Ausführungsbeispiels an der Position dieser Zylinderlinse eine hier konkave, also zerstreuende Zylinderlinse 6 auf. Die weitere Aufweitung des Strahls L in die zweite Raumrichtung x (bei Beibehaltung der Fokussierung F in der ersten Raumrichtung y) erfolgt hier somit durch die zerstreuenden Eigenschaften der Linse 6, wobei der Grad der erneuten Aufweitung bzw. die Ausdehnung der Teilstrahlen L1 und L2 im Interferenzbereich 5 in x-Richtung durch die Brennweite der Linse 6 eingestellt werden kann. Je größer die Defokussierung durch die Linse 6, desto größer die Strahlaufweitung in die zweite Raumrichtung x am Ort der Probenbearbeitung (bei konstant gehaltenem optischen Weg zwischen Linse 6 und Probe P). Durch geeignete Verschiebung der beiden Reflexionsspiegel 8b und 8c entgegen der zweiten Raumrichtung x bzw. in die zweite Raumrichtung x (und entsprechende Änderung des Verkippungswinkels der Spiegel relativ zur xy-Ebene) lässt sich auf einfache Art und Weise - wie auch bei den anderen Ausführungsformen - der Interferenzwinkel Θ und somit die Periode a der aufgebrachten Interferenzstrukturen (vgl. Figur 9) variieren.

Hier, wie auch bei den anderen Ausführungsbeispielen, sind für die Ausdehnung der Aufweitung in der zweiten Raumrichtung bzw. für das Verhältnis der Ausdehnungen des Laserstrahls in der zweiten Raumrichtung und in der ersten (fokussierten) Raumrichtung der Abstand der Linsen im Teleskop 9 (sofern vorhanden), die Brennweite der Zylinderlinse(n) 6 (bzw. 6a, 6b, vgl. nachfolgend) und die optischen Weglängen in den beiden Teilstrahlen L1 und L2 entscheidend. Durch geeignete Variation der entsprechenden Parameter lässt sich die gewünschte Aufweitung in der zweiten Raumrichtung (samt den Winkel Θ durch Verschieben oder Drehen der Spiegel 8a, 8b, 8c) auf einfache Art und Weise einstellen.

Nachfolgend werden zwei weitere Ausführungsbeispiele (neunte und zehnte Ausführungsform der Erfindung) beschrieben, bei denen die weitere Aufweitung in der zweiten Raumrichtung x auf Basis zweier Zylinderlinsen 6a und 6b erfolgt. Die Grundsätzlichen Aufbauten der beiden Ausführungsformen sind dabei wie beim in Figur 2 gezeigten Ausführungsbeispiel, so dass nachfolgend jeweils wieder nur die Unterschiede beschrieben werden.

Beide Ausführungsformen nutzen eine alternative Aufweit- und Auftrennanordnung 4, bei der im Strahlengang nach dem Teleskop 9 zunächst der halbdurchlässige Spiegel 7 folgt, bevor der transmittierte Teilstrahlengang L1 über die beiden Reflexionsspiegel 8a und 8b einerseits und der reflektierte Teilstrahlengang L2 mittels des dritten Reflexionsspiegels 8c andererseits zur Realisierung der Interferenz unter dem Interferenzwinkel Θ > 0 (hier: 35°) im Interferenzbereich 5 bzw. auf der zu bearbeitenden Probenoberfläche P im Probenvolumen 3 umgelenkt werden.

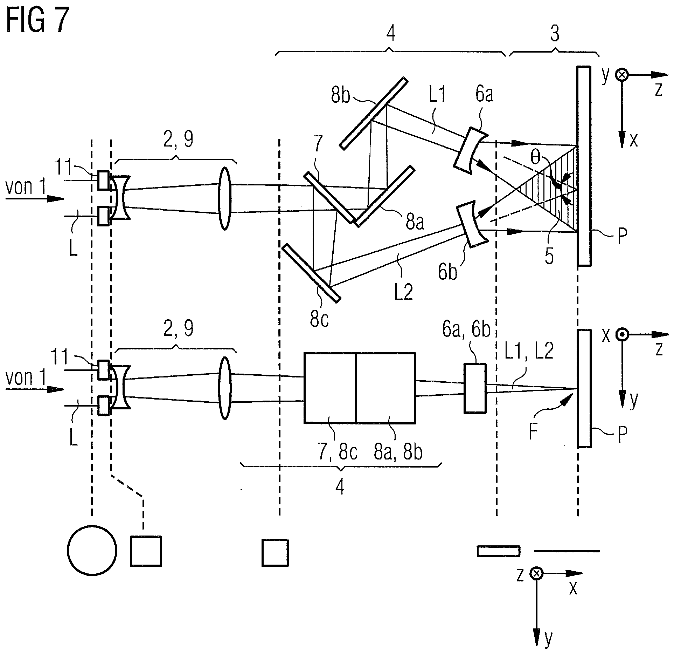

Im Unterschied zu den vorbeschriebenen Ausführungsbeispielen ist jedoch bei der neunten Ausführungsform in Figur 7 in jedem der beiden Teilstrahlengänge L1 und L2 nach den Reflexionsspiegeln 8b (Strahlengang L1) und 8c (Strahlengang L2) jeweils genau eine konkave, also zerstreuende Zylinderlinse angeordnet. Die Längsachse der Zylinderlinse 6a im Strahlengang L1 und die Längsachse der Zylinderlinse 6b im Strahlengang L2 sind dabei jeweils parallel zur ersten Raumrichtung y ausgerichtet, so dass eine Aufweitung dieser beiden Strahlengänge L1 und L2 in die zweite Raumrichtung x erfolgt. Der Grad der Aufweitung an der Probenoberfläche P kann über die Brennweite der hier identisch ausgebildeten, jedoch zum Realisieren des Überlappungswinkels Θ unter eben diesem Winkel verkippt zueinander angeordneten Zylinderlinsen 6a und 6b sowie durch den Abstand (in den beiden Strahlwegen L1 und L2) zwischen der jeweiligen Zylinderlinse und der Probenoberfläche nahezu beliebig eingestellt werden.

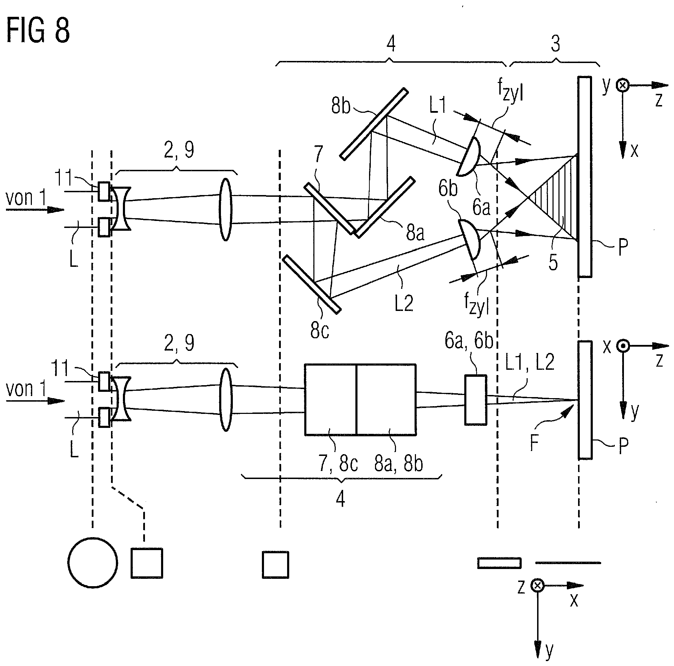

Das in Figur 8 gezeigte Ausführungsbeispiel ist mit dem in Figur 7 gezeigten Ausführungsbeispiel identisch, verwendet jedoch am Ort der beiden konkaven Zylinderlinsen 6a und 6b zwei identisch ausgebildete konvexe Zylinderlinsen (deren Längsachse ebenfalls in y-Richtung zeigt). Das Aufweiten in die zweite Raumrichtung x wird hier somit durch eine kurze Brennweite f_{zyl} der beiden Zylinderlinsen 6a und 6b, also durch ein zunächst starkes Fokussieren und dann erneutes Defokussieren der beiden Teilstrahlengänge L1 und L2 in der Ebene senkrecht zur ersten Raumrichtung y erreicht. Wird der Abstand der Probe P von den beiden Zylinderlinsen 6a und 6b sehr viel größer (z.B. Faktor 10 bis 20) gewählt als die Brennweite f_{zyl}, so ergibt sich eine erhebliche zusätzliche (im Vergleich zur Aufweitung im Teleskop 9, das hier, ebenso wie in Figur 7 und als weiterer Unterschied zum Aufbau in Figur 2, wie bei der in Figur 5 gezeigten Variante ausgebildet ist) Aufweitung in der zweiten Raumrichtung x.

Im Vergleich zum neunten und zehnten Ausführungsbeispiel haben die Ausführungsbeispiele 1 bis 7 in den Figuren 2 bis 6 den Vorteil einer einfacheren Justage: Bei den Figuren 7 und 8 müssen die beiden Zylinderlinsen 6a und 6b sehr genau aufeinander abgestimmt werden, um die Teilstrahlen im Überlappungsbereich 5 parallel zur Überlappung zu bringen. Die in den Figuren 1 bis 5 gezeigten Ausführungsbeispiele erlauben demgegenüber auch leichte Abweichungen beim Einrichten der optischen Elemente 6, 7 und 8 ohne gravierende Auswirkung auf das erwünschte parallele Überlappen im Interferenzbereich 5.

In allen gezeigten Ausführungsformen der Figuren 2 bis 8 können weitere optische Elemente, wie beispielsweise Polarisatoren, zur Optimierung der Strahlführung oder zur weiteren Anpassung der Strukturierung eingesetzt werden. Beispielsweise lassen sich unmittelbar vor den Elementen 11 und/oder 2 Strahlhomogenisatoren einsetzen.

Figur 9a zeigt Beispiele a) bis d) für erfindungsgemäß in den Aufbauten von Fig. 2 bis 4b und 5 bis 8 mittels eines gepulsten Lasers auf die zu bearbeitende Oberfläche aufbringbare Interferenzstrukturen. Gemäß der in Figur 9a gezeigten Formel hängt die Periode a der Interferenzstrukturen, also der Abstand benachbarter Linien der Interferenzstruktur, lediglich von der Wellenlänge des Laserlichts 1 sowie vom Interferenzwinkel Θ (vgl. z.B. Figur 2) zwischen den beiden auf die Probenoberfläche P eingestrahlten Teilstrahlen L1 und L2 ab. Wie Figur 9a zeigt, lassen sich erfindungsgemäß Perioden a im nm- bis im µm-Bereich, Fokusausdehnungen in die erste Raumrichtung y im µm bis mm-Bereich und Bearbeitungsausdehnungen in die zweite Raumrichtung x bzw. w von bis zu 20 bis 40 cm erreichen, vgl. Figur 9a-a) Auch eine kleinere Fokusausdehnung (bis hinunter zu 0.01 cm) in diese Richtung ist denkbar.

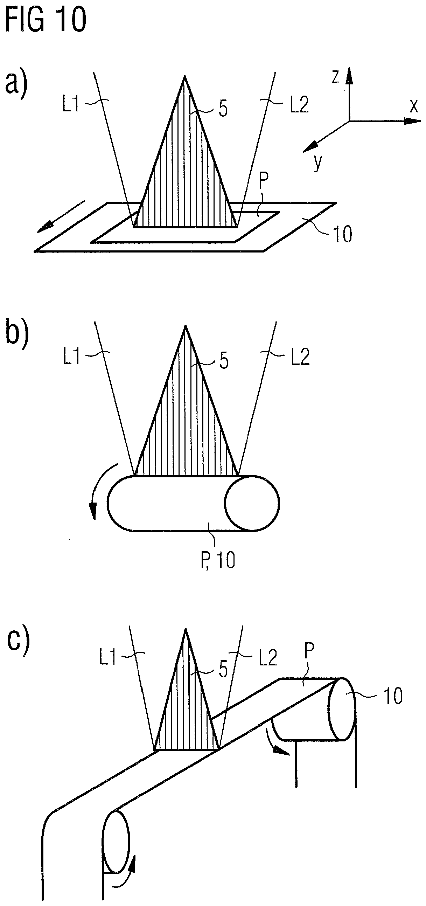

Wie die Beispiele in Figuren 9a-b), 9a-c) zeigen, lassen sich, durch geeignete Wahl des Vorschubs der Probe P z.B. in y-Richtung (vgl. Figur 10) oder auch nur in die x-Richtung oder sowohl in x- also auch in y-Richtung einerseits und eine daran angepasste Pulsfrequenz der einzelnen Laserpulse andererseits entweder (Figur 9a-b)) zweidimensionale Interferenzstrukturen erzeugen (erhöhte Pulsfrequenz im Vergleich zum Probenvorschub führt zu einem vergrößerten Abstand benachbarter Interferenzstrukturen durch zwei aufeinanderfolgende Pulse in y-Richtung) oder auch (Figur 9a-c)) eindimensionale, durch Überlappung der Interferenzstrukturen zeitlich benachbarter Pulse in y-Richtung durch geeignete Verringerung der Transportgeschwindigkeit in y-Richtung entstehende Interferenzstrukturen erzeugen. (In Figur 9a-b) ist der Abstand d1 der Strukturen aufeinanderfolgender Laserpulse größer als die Ausdehnung der Strukturen in die Fokussierrichtung y, in Figur 9a-c) gilt für den Abstand d2 das Umgekehrte.)
Wie Figur 9a-d) zeigt, lässt sich mittels eines Probenvorschubs, der eine zusätzliche Komponente in der zweiten Raumrichtung x aufweist, ein in die zweite Raumrichtung x versetztes Interferenzmuster erzeugen. d_{y} bezeichnet hier (wie auch d1 und d2) den Abstand benachbarter Strukturen in y-Richtung, dₓ den zusätzlichen Versatz zweier benachbarter Interferenzstrukturen in Richtung x.

Figur 9b zeigt die mit dem Aufbau aus Figur 4c realisierbaren Interferenzstrukturen. Wie die Figur zeigt, verlaufen im Gegensatz zur Figur 9a (wo die einzelnen Intensitätsmaxima jeweils parallel zur ersten Raumrichtung y verlaufen und in Richtung der zweiten Raumrichtung x bzw. w nebeneinander angeordnet sind) die einzelnen Intensitätsmaxima hier längs der zweiten Raumrichtung x, also der Aufweitrichtung (und sind daher sehr viel weiter ausgedehnt, als die einzelnen in Figur 9a gezeigten Intensitätsmaxima), und sind in Richtung der ersten Raumrichtung y nebeneinander angeordnet (die erste Raumrichtung y ist somit in Figur 9b die Richtung der Periodizität a der einzelnen Maxima, wohingegen in Figur 9a die Periodizitätsrichtung die zweite Raumrichtung x ist). Auch im in den Figuren 4c und 9b gezeigten Fall ergibt sich quantitativ für die Periode a = λ/(2sin(Θ/2)).

Wie Figur 10a) zeigt, kann mit Hilfe eines hier nur angedeuteten Förderbandes 10 die auf diesem Band aufliegende Probe P in y-Richtung transportiert werden, um das ein- oder zweidimensionale Interferenzmuster je nach Transportgeschwindigkeit einzustrukturieren. Figur 10b) deutet an, dass die Probe P auch auf einer sich drehenden Walze zum Strukturieren angeordnet werden kann. Figur 10c) zeigt schließlich, dass der Vorschub in y-Richtung auch mit einer Rolle-zu-Rolle-Transportvorrichtung erfolgen kann. Auf die gezeigte Art und Weise können große Bauteile schnell strukturiert werden.

## Patentansprüche

1. Vorrichtung zur Interferenzstrukturierung einer flächigen Probe (P) mit
einem Laser (1),
einer im Strahlengang des Lasers (1) positionierten Fokussieranordnung (2), mit der der Laserstrahl (L) in einer ersten Raumrichtung (y) fokussiert in ein Probenvolumen (3), in dem die flächige Probe (P) platzierbar ist oder platziert ist, abbildbar ist, wobei die Vorrichtung eine Aufweit- und Trennanordnung (4) aufweist.
Dabei ist die Aufweit- und Auftrennanordnung (4) im Strahlengang nach der Fokussieranordnung (2) positioniert und mit der Fokussieranordnung (2) ist der Laserstrahl (L) unter Beibehaltung der fokussierten Abbildung in das Probenvolumen (3) in der ersten Raumrichtung (y) und in einer zweiten, zur ersten Raumrichtung (y) nicht parallelen Raumrichtung (x, w) aufweitbar.
Die Vorrichtung weist des Weiteren ein Strahlteiler (7) auf.
Mit dem Strahlteiler (7) ist der Laserstrahl (L) in zwei Teilstrahlen (L1, L2) auftrennbar.
Die Vorrichtung weist des Weiteren ein oder mehrere Reflexionselemente (a, 8b, 8c) auf.
Die beiden Teilstrahlen (L1, L2) sind mit dem einen oder den mehreren Reflexionselement(en) (8a, 8b, 8c) so auf das Probenvolumen (3) gerichtet, dass die beiden Teilstrahlen (L1, L2) innerhalb des Probenvolumens (3) in einem Interferenzbereich (5) interferieren.
Die Vorrichtung ist **dadurch gekennzeichnet, dass**
die Aufweit- und Trenneinrichtung mindestens eine Zylinderlinse (6, 6a, 6b) zum Aufweiten des Laserstrahls (L) oder der beiden Teilstrahlen (L1, L2) in der zweiten Raumrichtung (x, w) aufweist.

2. Vorrichtung nach dem vorhergehenden Anspruch,
***dadurch gekennzeichnet, dass***
die Fokussieranordnung (2) eine strahlquerschnittverändernde Fokussieranordnung (9) ist, mit der der Laserstrahl (L) auch hinsichtlich seines Strahlquerschnitts veränderbar ist.

3. Vorrichtung nach dem vorhergehenden Anspruch,
***dadurch gekennzeichnet, dass***
der Laserstrahl (L) mit der als strahlquerschnittverändernder Fokussieranordnung (9) ausgebildeten Fokussieranordnung (2) hinsichtlich seines Strahlquerschnitts in zwei zueinander nicht parallelen Raumrichtungen veränderbar ist.

4. Vorrichtung nach Anspruch 1,
***dadurch gekennzeichnet, dass***
der Laserstrahl (L) mit der Fokussieranordnung (2) zunächst auch in einer weiteren, zur ersten Raumrichtung (y) nicht parallelen Raumrichtung fokussiert in das Probenvolumen (3) abbildbar ist.

5. Vorrichtung nach einem der vorhergehenden Ansprüche,
***dadurch gekennzeichnet, dass***
die Aufweit- und Auftrennanordnung (4)
• einen halbdurchlässigen Spiegel als den genannten Strahlteiler (7) aufweist zum Auftrennen des Laserstrahls (L) in die zwei Teilstrahlen (L1, L2)

6. Vorrichtung nach einem der vorhergehenden Ansprüche 1, 4 oder 5,
***dadurch gekennzeichnet, dass***
die Fokussieranordnung (2) entweder
eine strahlquerschnittverändernde Fokussieranordnung (9) ist und die Zylinderlinse umfasst,
oder
dass die Fokussieranordnung (2) eine den Strahlquerschnitt nicht verändernde Fokussieranordnung ist.

7. Vorrichtung nach einem der vorhergehenden Ansprüche 1 bis 4 oder 6,
***dadurch gekennzeichnet, dass***
die Aufweit- und Auftrennanordnung (4) im Strahlengang (L, L1, L2) zunächst eine Zylinderlinse als erstes optisches Element (6) aufweist zum Bewirken des Aufweitens in der zweiten Raumrichtung (x, w), danach ein zweites optisches Element (7) aufweist zum Auftrennen des Laserstrahls (L) in die beiden Teilstrahlen (L1, L2), und schließlich ein oder mehrere dritte optische Elemente (8a, 8b, 8c) aufweist, um die beiden Teilstrahlen (L1, L2) so auf das Probenvolumen (3) zu richten, dass sie innerhalb des Probenvolumens (3) in dem Interferenzbereich (5) interferieren.

8. Vorrichtung nach dem vorhergehenden Anspruch,
***dadurch gekennzeichnet, dass***
die Zylinderlinse eine konvexe Zylinderlinse (6) ist und den Strahlengang (L) auf das einen Strahlteiler (7) umfassende zweite optische Element abbildet.

9. Vorrichtung nach Anspruch 7,
***dadurch gekennzeichnet, dass***
die Zylinderlinse eine konvexe Zylinderlinse (6) ist und den Strahlengang (L) auf das einen Strahlteiler (7) umfassende zweite optische Element so abbildet, dass sowohl die Brennweite *f_{zyl}* der Zylinderlinse (6) größer ist als der Weg im Strahlengang (L, L1, L2) zwischen der Zylinderlinse (6) und dem Strahlteiler (7), als auch der Weg *d_{zyl-fok}* im Strahlengang (L, L1, L2) zwischen der Zylinderlinse (6) einerseits und dem Ort des Fokus (F) im Probenvolumen (3) in der ersten Raumrichtung (y) andererseits um mehr als den Faktor 2 größer ist als die Brennweite *f_{zyo}* der Zylinderlinse (6).

10. Vorrichtung nach Anspruch 7,
***dadurch gekennzeichnet, dass***
zwei der dritten optischen Elemente konvexe Zylinderlinsen (6a, 6b) sind, die jeweils einen der beiden Teilstrahlen (L1, L2) in das Probenvolumen (3) abbilden.

11. Vorrichtung nach Anspruch 7,
***dadurch gekennzeichnet, dass***
zwei der dritten optischen Elemente konkave Zylinderlinsen (6a, 6b) sind, die jeweils einen der beiden Teilstrahlen (L1, L2) in das Probenvolumen (3) abbilden.

12. Vorrichtung nach einem der vorhergehenden Ansprüche,
***gekennzeichnet dadurch, dass***
mit einer Bewegungseinheit (10), mit der die Probe (P) oder Abschnitte derselben im Probenvolumen (3) oder durch das Probenvolumen (3) hindurch bewegbar ist,
oder wobei
die Fokussieranordnung (2), die Aufweit- und Auftrennanordnung (4) und/oder Teile mindestens einer dieser beiden Anordnungen (2, 4) dazu ausgebildet ist/sind, den Laserstrahl (L) und/oder die beiden aus diesem hervorgehenden Teilstrahlen (L1, L2) relativ zur feststehend angeordneten flächigen Probe (P) auszulenken.

13. Verfahren zur Interferenzstrukturierung einer flächigen Probe (P), wobei das Verfahren mit einer Vorrichtung nach einem der vorhergehenden Ansprüche durchgeführt wird.

14. Verwendung einer Vorrichtung oder eines Verfahrens nach einem der vorhergehenden Ansprüche zum Interferenzstrukturieren einer Folie als Probe (P) oder einer Probe (P) in einer Rolle-zu-Rolle-Konfiguration.

## Claims

1. Apparatus for interference structuring a two-dimensional sample (P) with
a laser (1),
a focusing arrangement (2) that is positioned in the beam path of the laser (1) and with which the laser beam (L) is able to be imaged, focused in a first spatial direction (y), into a sample volume (3) in which the two-dimensional sample (P) is placeable or is placed, wherein the apparatus has an expanding and dividing arrangement (4) .
The expanding and separating arrangement (4) is in this case positioned in the beam path downstream of the focusing arrangement (2), and the laser beam (L) is expandable in the first spatial direction (y) and in a second spatial direction (x, w), which is not parallel to the first spatial direction (y), while maintaining the focused imaging into the sample volume (3) using the focusing arrangement (2).
The apparatus furthermore has a beam splitter (7).
The laser beam (L) is separable into two partial beams (L1, L2) using the beam splitter (7).
The apparatus furthermore has one or more reflection elements (a, 8b, 8c).
The two partial beams (L1, L2) are directed using the one or the plurality of reflection element(s) (8a, 8b, 8c) onto the sample volume (3) such that the two partial beams (L1, L2) interfere in an interference region (5) within the sample volume (3).
The apparatus is **characterized in that**
the expanding and dividing device has at least one cylindrical lens (6, 6a, 6b) for expanding the laser beam (L) or the two partial beams (L1, L2) in the second spatial direction (x, w).

2. Apparatus according to the preceding claim,
***characterized in that***
the focusing arrangement (2) is a beam-cross-section-changing focusing arrangement (9) with which the laser beam (L) is also changeable with respect to its beam cross section.

3. Apparatus according to the preceding claim,
***characterized in that***
the laser beam (L) is changeable with respect to its beam cross section in two mutually non-parallel spatial directions using the focusing arrangement (2) that is embodied as a beam-cross-section-changing focusing arrangement (9).

4. Apparatus according to Claim 1,
***characterized in that***
the laser beam (L) is able to be imaged in a focused manner initially also in a further spatial direction that is not parallel to the first spatial direction (y), into the sample volume (3) using the focusing arrangement (2).

5. Apparatus according to one of the preceding claims,
***characterized in that***
the expanding and separating arrangement (4)
• has a semi-transmissive mirror as the aforementioned beam splitter (7) for separating the laser beam (L) into the two partial beams (L1, L2).

6. Apparatus according to one of the preceding Claims 1, 4 or 5,
***characterized in that***
the focusing arrangement (2) either
is a beam-cross-section-changing focusing arrangement (9) and comprises the cylindrical lens,
or
**in that** the focusing arrangement (2) is a focusing arrangement that does not change the beam cross section.

7. Apparatus according to one of the preceding Claims 1 to 4 or 6,
***characterized in that***
the expanding and separating arrangement (4) has in the beam path (L, L1, L2) first of all a cylindrical lens as a first optical element (6) for effecting the expansion in the second spatial direction (x, w), then a second optical element (7) for separating the laser beam (L) into the two partial beams (L1, L2) and finally one or more third optical elements (8a, 8b, 8c) for directing the two partial beams (L1, L2) onto the sample volume (3) such that they interfere in the interference region (5) within the sample volume (3).

8. Apparatus according to the preceding claim,
***characterized in that***
the cylindrical lens is a convex cylindrical lens (6) and images the beam path (L) onto the second optical element comprising a beam splitter (7).

9. Apparatus according to Claim 7,
***characterized in that***
the cylindrical lens is a convex cylindrical lens (6) and images the beam path (L) onto the second optical element comprising a beam splitter (7) such that not only is the focal length *f_{zyl}* of the cylindrical lens (6) greater than the distance in the beam path (L, L1, L2) between the cylindrical lens (6) and the beam splitter (7) but also the distance *d_{zyl-fok}* in the beam path (L, L1, L2) between the cylindrical lens (6) and the location of the focus (F) in the sample volume (3) in the first spatial direction (y) is greater than the focal length *f_{zyo}* of the cylindrical lens (6) by more than a factor of 2.

10. Apparatus according to Claim 7,
***characterized in that***
two of the third optical elements are convex cylindrical lenses (6a, 6b) that image in each case one of the two partial beams (L1, L2) into the sample volume (3).

11. Apparatus according to Claim 7,
***characterized in that***
two of the third optical elements are concave cylindrical lenses (6a, 6b) that image in each case one of the two partial beams (L1, L2) into the sample volume (3).

12. Apparatus according to one of the preceding claims,
***characterized in that***
having a movement unit (10) with which the sample (P) or portions thereof are movable in the sample volume (3) or through the sample volume (3),
or wherein
the focusing arrangement (2), the expanding and separating arrangement (4) and/or parts of at least one of these arrangements (2, 4) is/are configured to deflect the laser beam (L) and/or the two partial beams (L1, L2), which emerge from the former, relative to the fixedly arranged two-dimensional sample (P).

13. Method for interference structuring of a two-dimensional sample (P), wherein the method is carried out with an apparatus according to one of the preceding claims.

14. Use of an apparatus or a method according to one of the preceding claims for interference structuring of a film as a sample (P) or a sample (P) in a roll-to-roll configuration.

## Revendications

1. Dispositif de structuration d'interférences d'un échantillon plat (P) comprenant
un laser (1),
un dispositif de focalisation (2) agencé sur le chemin optique du laser (1), qui permet de représenter de manière focalisée le faisceau laser (L) dans une première direction de l'espace (y) dans un volume d'échantillon (3), dans lequel l'échantillon plat (P) peut être placé ou est placé, le dispositif comprenant un dispositif d'élargissement et de séparation (4).
Du fait que dispositif d'élargissement et de séparation (4) est agencé sur le chemin optique après le dispositif de focalisation (2), et grâce au dispositif de focalisation (2), le faisceau laser (L) peut être élargi dans la première direction de l'espace (y) et dans une deuxième direction de l'espace (x, w) non parallèle à la première direction de l'espace (y), tout en maintenant la représentation focalisée dans le volume d'échantillon (3), .
Le dispositif comprend en outre un séparateur de faisceau (7).
Le séparateur de faisceau (7) permet de séparer le faisceau laser (L) en deux faisceaux partiels (L1, L2).
Le dispositif comprend en outre un ou plusieurs éléments de réflexion (8a, 8b, 8c).
Les deux faisceaux partiels (L1, L2) sont orientés avec le ou les plusieurs éléments de réflexion (8a, 8b, 8c) vers le volume d'échantillon (3) de façon à ce que les deux faisceaux partiels (L1, L2) interfèrent à l'intérieur du volume d'échantillon (3) dans une zone d'interférences (5).
Le dispositif est **caractérisé en ce que**
le dispositif d'élargissement et de séparation comprend au moins une lentille cylindrique (6, 6a, 6b) pour l'élargissement du faisceau laser (L) ou des deux faisceaux partiels (L1, L2) dans la deuxième direction de l'espace (x, w).

2. Dispositif selon la revendication précédente,
**caractérisé en ce que**
le dispositif de focalisation (2) est un dispositif de focalisation modifiant la section transversale des faisceaux (9) avec lequel le faisceau laser (L) peut également être modifié en ce qui concerne sa section transversale.

3. Dispositif selon la revendication précédente,
**caractérisé en ce que**
le faisceau laser (L) peut être modifié en ce qui concerne sa section transversale dans deux directions de l'espace non parallèles entre elles grâce au dispositif de focalisation (2) en tant que dispositif de focalisation modifiant la section transversale des faisceaux (9).

4. Dispositif selon la revendication 1,
**caractérisé en ce que**
le faisceau laser (L) peut également être représenté, grâce au dispositif de focalisation (2), de manière focalisée dans le volume d'échantillon (3) dans une autre direction de l'espace non parallèle à la première direction de l'espace (y).

5. Dispositif selon l'une des revendications précédentes,
**caractérisé en ce que**
le dispositif d'élargissement et de séparation (4)
• comprend un miroir semi-transparent en tant que séparateur de faisceau (7) pour la séparation du faisceau laser (L) en deux faisceaux partiels (L1, L2)

6. Dispositif selon l'une des revendications précédentes 1, 4 ou 5,
**caractérisé en ce que**
soit le dispositif de focalisation (2)
est un dispositif de focalisation modifiant la section transversale des faisceaux (9) et comprend la lentille cylindrique
soit
le dispositif de focalisation (2) est un dispositif de focalisation ne modifiant pas la section transversale des faisceaux.

7. Dispositif selon l'une des revendications précédentes 1 à 4 ou 6,
**caractérisé en ce que**
le dispositif d'élargissement et de séparation (4) comprend d'abord, dans le chemin des faisceaux (L, L1, L2), en tant que premier élément optique (6), une lentille cylindrique pour provoquer l'élargissement dans la deuxième direction de l'espace (x, w), puis un deuxième élément optique (7) pour la séparation du faisceau laser (L) dans les deux faisceaux partiels (L1, L2) et enfin un ou plusieurs troisièmes éléments optiques (8a, 8b, 8c) afin d'orienter les deux faisceaux partiels (L1, L2) vers le volume d'échantillon (3) de façon à ce qu'ils interfèrent à l'intérieur du volume d'échantillon (3) dans la zone d'interférence (5).

8. Dispositif selon la revendication précédente,
**caractérisé en ce que**
la lentille cylindrique est une lentille cylindrique convexe (6) et représente le chemin du faisceau (L) sur le deuxième élément optique comprenant un séparateur de faisceau (7).

9. Dispositif selon la revendication 7,
**caractérisé en ce que**
la lentille cylindrique est une lentille cylindrique convexe (6) et représente le chemin du faisceau (L) sur le deuxième élément optique comprenant un séparateur de faisceau (7), de façon à ce que la distance focale f_{zyl} de la lentille cylindrique (6) soit supérieure à la distance suivant le chemin optique des faisceaux (L, L1, L2) entre la lentille cylindrique (6) et le séparateur de faisceau (7) ainsi que la distance d_{zyl-fok} suivant le chemin optique des faisceaux (L, L1, L2) entre la lentille cylindrique (6) d'une part et la localisation du point focal (F) dans le volume d'échantillon (3) dans la première direction de l'espace (y) et d'autre part soit supérieure d'un facteur de plus de 2 à la distance focale f_{zyl} de la lentille cylindrique (6).

10. Dispositif selon la revendication 7,
**caractérisé en ce que**
deux des troisièmes éléments optiques sont des lentilles cylindriques convexes (6a, 6b) qui représentent chacune un des faisceaux partiels (L1, L2) dans le volume d'échantillon (3).

11. Dispositif selon la revendication 7,
**caractérisé en ce que**
deux des troisièmes éléments optiques sont des lentilles cylindriques concaves (6a, 6b) qui représentent chacune un des deux faisceaux partiels (L1, L2) dans le volume d'échantillon (3).

12. Dispositif selon l'une des revendications précédentes,
**caractérisé en ce que**
grâce à une unité de mouvement (10), l'échantillon (P) ou des parties de celui-ci peuvent être déplacées dans le volume d'échantillon (3) ou à travers le volume d'échantillon (3),
ou dans lequel
le dispositif de focalisation (2), le dispositif d'élargissement et de séparation (4) et/ou des parties d'au moins un de ces deux dispositifs (2, 4) est/sont conçu(s) pour dévier le faisceau laser (L) et/ou les deux faisceaux partiels (L1, L2) provenant de celui-ci, par rapport à l'échantillon plat (P) disposé de manière fixe.

13. Procédé de structuration d'interférences d'un échantillon plat (P), dans lequel le procédé est exécuté avec un dispositif selon l'une des revendications précédentes.

14. Utilisation d'un dispositif ou d'un procédé selon l'une des revendications précédentes pour la structuration d'interférences d'un film en tant qu'échantillon (P) ou d'un échantillon (P) dans une configuration de rouleau à rouleau.
